# EUROPÄISCHE PATENTSCHRIFT

(11) **EP 1 454 948 B1**
(45) Veröffentlichungstag und Bekanntmachung des Hinweises auf die Patenterteilung: **22.10.2008**
(21) Anmeldenummer: 04003957.0
(22) Anmeldetag: 21.02.2004
(51) Int. Cl.: C08K 5/00

(54) **Flammschutzmittel-Stabilisator-Kombination für thermoplastische Polymere**
Flameproof agent-stabiliser-combination for thermoplastic polymers
Combinaison d'agent ignifugeant et stabilisant pour polymères thermoplastiques

(30) Priorität: 03.03.2003 DE 10309385
(43) Veröffentlichungstag der Anmeldung: 08.09.2004
(73) Patentinhaber: Clariant Produkte (Deutschland) GmbH, 65929 Frankfurt am Main (DE)
(72) Erfinder: Hörold, Sebastian, Dr., 86420 Diedorf (DE); Schacker, Ottmar, Dr., 86368 Gersthofen (DE)

(56) Entgegenhaltungen:
- EP-A- 0 903 372
- EP-A- 1 024 167
- WO-A-00/66658

## Beschreibung

Die Erfindung betrifft eine Flammschutzmittel-Stabilisator-Kombination für thermoplastische Polymere, sowie polymere Formmassen, die solche Flammschutzmittel-Stabilisator-Kombinationen enthalten.

Die Verarbeitung von thermoplastischen Kunststoffen erfolgt bis auf wenige Ausnahmen in der Schmelze. Die damit verbundenen Struktur- und Zustandsänderungen übersteht kaum ein Kunststoff, ohne sich in seiner chemischen Struktur zu verändern. Vernetzungen, Oxidation, Molekulargewichtsänderungen und damit auch Änderungen der physikalischen und technischen Eigenschaften können die Folge sein. Um die Belastung der Polymere während der Verarbeitung zu reduzieren, setzt man je nach Kunststoff unterschiedliche Additive ein. Im Allgemeinen werden Stabilisatoren zugegeben, die die Veränderungsprozesse wie Vernetzungs- oder Abbaureaktionen unterbinden oder zumindest bremsen. Weiterhin werden den meisten Kunststoffen Gleitmittel beigemengt, die primär die Aufgabe haben, das Fließverhalten der Schmelze zu verbessern.

In der Regel wird eine Vielzahl unterschiedlicher Additive gleichzeitig verwendet, von denen jedes für sich eine Aufgabe übernimmt. So werden Antioxidantien und Stabilisatoren eingesetzt, damit der Kunststoff ohne chemische Schädigung die Verarbeitung übersteht und anschließend lange Zeit gegen äußere Einflüsse wie Hitze, UV-Licht, Witterung und Sauerstoff (Luft) stabil ist. Neben der Verbesserung des Fließverhaltens verhindern Gleitmittel ein zu starkes Kleben der Kunststoffschmelze an heißen Maschinenteilen und wirken als Dispergiermittel für Pigmente, Füll- und Verstärkungsstoffe.

Durch die Verwendung von Flammschutzmitteln kann die Stabilität des Kunststoffs bei der Verarbeitung in der Schmelze beeinflusst werden. Flammschutzmittel müssen häufig in hohen Dosierungen zugesetzt werden, um eine ausreichende Flammwidrigkeit des Kunststoffs nach internationalen Normen sicherzustellen. Aufgrund Ihrer chemischen Reaktivität, die für die Flammschutzwirkung bei hohen Temperaturen erforderlich ist, können Flammschutzmittel die Verarbeitungsstabilität von Kunststoffen beeinträchtigen. Es kann beispielsweise zu verstärktem Polymerabbau, zu Vernetzungsreaktionen, zu Ausgasungen oder Verfärbungen kommen. Effekte, die bei der Kunststoffverarbeitung ohne Flammschutzmittel eventuell gar nicht oder nur in abgeschwächter Form auftreten.

Ohne den Zusatz von Flammschutzmitteln werden Polyamide im Allgemeinen durch kleine Mengen von Kupferhalogeniden sowie aromatische Amine und sterisch gehinderten Phenole stabilisiert, wobei die Erzielung einer langfristigen Stabilität bei hohen Dauergebrauchstemperaturen im Vordergrund steht (H. Zweifel (Ed.): "Plastics Additives Handbook", 5th Edition, Carl Hanser Verlag, München, 2000, Seiten 80 bis 84).

Insbesondere für thermoplastische Polymere haben sich die Salze von Phosphinsäuren (Phosphinate) als wirksame flammhemmende Zusätze erwiesen (DE-A-2 252 258 und DE-A-2 447 727). Calcium- und Aluminiumphosphinate sind in Polyestern als besonders effektiv wirksam beschrieben worden und beeinträchtigen die Materialeigenschaften der Polymerformmassen weniger als z.B. die Alkalimetallsalze (EP-A-0 699 708).

Darüber hinaus wurden synergistische Kombinationen von Phosphinaten mit bestimmten stickstoffhaltigen Verbindungen gefunden, die in einer ganzen Reihe von Polymeren als Flammschutzmittel effektiver wirken, als die Phosphinate allein (PCT/EP97/01664 sowie DE-A-197 34 437 und DE-A-197 37 727).

Zur Stabilisierung von Polymerformmassen mit phosphorhaltigen Flammschutzmitteln haben sich Carbodiimide, Isocyanate und Isocyanurate als wirksam erwiesen (DE-A-199 20 276).

Insbesondere bei der Verwendung phosphorhaltiger Flammschutzmittel in Polyamiden erwies sich die Wirkung der bisher beschriebenen Stabilisatoren als unzureichend, speziell um die bei der Verarbeitung auftretenden Effekte wie Verfärbung und Molekulargewichtsabbau zu unterdrücken.

Die DE-A-196 14 424 beschreibt Phosphinate in Verbindung mit Stickstoffsynergisten in Polyestern und Polyamiden. Die DE-A-199 33 901 beschreibt Phosphinate in Kombination mit Melaminpolyphosphat als Flammschutzmittel für Polyester und Polyamide. Bei der Verwendung dieser neu entwickelten, sehr wirksamen Flammschutzmittel kann es aber zu partiellem Polymerabbau sowie zu Verfärbungen des Polymers, insbesondere bei Verarbeitungstemperaturen oberhalb von 300°C, kommen.

Es war daher Aufgabe der vorliegenden Erfindung, Flammschutzmittelkombinationen für thermoplastische Kunststoffe zur Verfügung zu stellen, die neben der Flammwidrigkeit auch eine stabilisierende Wirkung auf den Kunststoff ausüben. Gelöst wird diese Aufgabe durch Zusatz von basischen oder amphoteren Oxiden, Hydroxiden, Carbonaten, Silikaten, Boraten, Stannaten, gemischten Oxid-Hydroxiden, Oxid-Hydroxid-Carbonaten, Hydroxid-Silikaten oder Hydroxid-Boraten oder Mischungen dieser Stoffe (Komponente C) in Kombination mit Mischung aus einem Phosphonit oder einem Phosphonit/Phosphit-Gemisch (Komponente D) und einem Ester oder Salz der Montanwachssäure (Komponente E) oder einer Kombination aus den Komponenten D oder E mit einem aromatischen di- oder tri-carboxylester bzw. -amid (Komponente F) oder einer Kombination aus D, E und F, bei der Verwendung von Phosphinaten (Komponente A) oder deren Mischungen mit stickstoffhaltigen Synergisten (Komponente B) als Flammschutzmittel.

Gegenstand der Erfindung ist daher eine Flammschutzmittel-Stabilisator-Kombination für thermoplastische Polymere, enthaltend als Komponente A 25 bis 89,8 Gew.-% eines Phosphinsäuresalzes der Formel (I) und/oder eines Diphosphinsäuresalzes der Formel (II) und/oder deren Polymere, 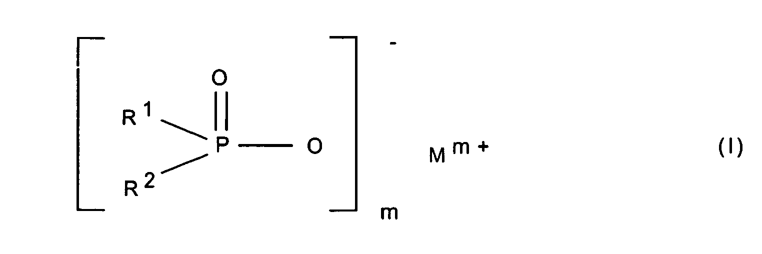 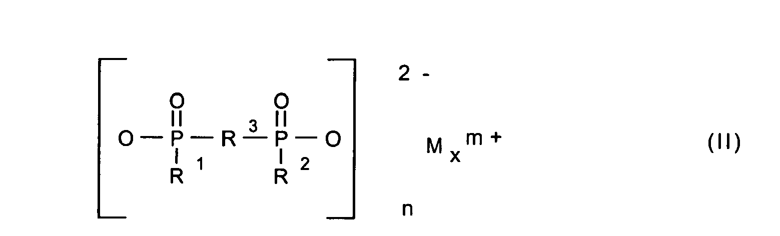 worin
- R¹, R²: gleich oder verschieden sind und Methyl, Ethyl, n-Propyl, iso-Propyl, n-Butyl, tert-Butyl, n-Pentyl und/oder Phenyl
- R³: C₁-C₁₀-Alkylen, linear oder verzweigt, C₆-C₁₀-Arylen, -Alkylarylen oder - Arylalkylen;
- M: Mg, Ca, AI, Sb, Sn, Ge, Ti, Zn, Fe, Zr, Ce, Bi, Sr, Mn, Li, Na, K und/oder eine protonierte Stickstoffbase;
- m: 1 bis 4;
- n: 1 bis 4;
- x: 1 bis 4
bedeuten,
als Komponente B 10 bis 74,8 Gew.-% eines stickstoffhaltigen Synergisten oder eines Phosphor/Stickstoff Flammschutzmittels, als Komponente C 0,1 bis 50 Gew.-% eines basischen oder amphoteren Oxides, Hydroxides, Carbonates, Silikates, Borates, Stannates, gemischten Oxid-Hydroxides, Oxid-Hydroxid-Carbonates, Hydroxid-Silikates oder Hydroxid-Borates oder Mischungen dieser Stoffe, als Komponente D 0 bis 5 Gew.-%. eines Phosphonits der allgemeinen Struktur
R-[P(OR₁)₂]ₘ (I)
wobei
- R: ein ein- oder mehrwertiger aliphatischer, aromatischer oder hetero-aromatischer organischer Rest ist und
- R₁: eine Verbindung der Struktur (II) 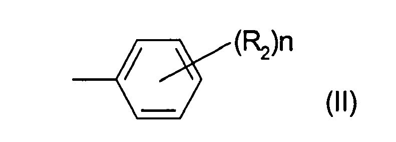 ist oder die beiden Reste R₁ eine verbrückende Gruppe der Struktur (III) bilden 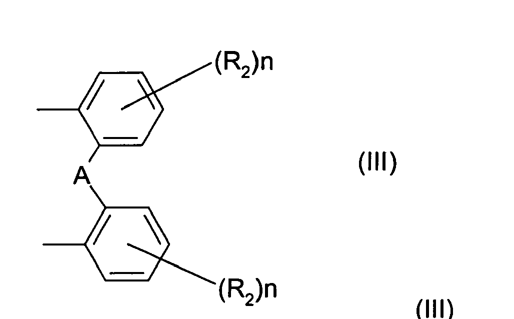 mit
- A: direkter Bindung, O, S, C₁₋₁₈ alkylen (linear oder verzweigt), C₁₋₁₈ alkyliden (linear oder verzweigt), in denen
- R₂: unabhängig voneinander C₁₋₁₂ alkyl (linear oder verzweigt), C₁₋₁₂ alkoxy, C₅₋₁₂ cycloalkyl bedeuten und
- n: 0 bis 5 sowie
- m: 1 bis 4 bedeutet,
als Komponente E 0 bis 5 Gew.-% eines Esters oder Salzes der Montanwachssäure und als Komponente F 0,1 bis 5 Gew.-% eines N,N'-bis-piperdinyl-1 ,3-benzoldicarboxamid und/oder N,N'-bis(2,2,6,6-tetramethyl-4-piperidinyl)-1,3-benzoldicarboxamid, wobei die Summe der Komponenten immer 100 Gew.-% beträgt.

Überraschenderweise wurde gefunden, dass erfindungsgemäße Kombinationen von Phosphinaten und gegebenenfalls Stickstoffsynergisten, wie beispielsweise Melaminpolyphosphat, eine deutlich verbesserte Stabilität bei der Einarbeitung in Polymere aufweisen, wenn bestimmte Oxide, Hydroxide, Carbonate, Silikate, Borate, Stannate, gemischte Oxid-Hydroxide, Oxid-Hydroxid-Carbonate, Hydroxid-Silikate oder Hydroxid-Borate oder Mischungen dieser Stoffe in Kombination mit Mischungen aus einem Phosphonit oder einem Phosphonit/Phosphit-Gemisch und einem Ester oder Salz der Montanwachssäure oder einer Kombination aus diesen Komponenten mit einem aromatischen di- oder tri-carboxylester bzw. -amid oder einer Kombination daraus zugesetzt werden. Durch die genannten Oxide Hydroxide, Carbonate, Silikate, Borate, Stannate, gemischte Oxid-Hydroxide, Oxid-Hydroxid-Carbonate, Hydroxid-Silikate oder Hydroxid-Borate oder Mischungen dieser Stoffe kann die Verfärbung zwar unterdrückt werden, es wird aber Polymerabbau beobachtet. Überraschend wurde gefunden, das erst durch Zusatz weiterer, bestimmter Additive auch der Polymerabbau verhindert werden kann.

Die erfindungsgemäßen Kombinationen reduzieren die Verfärbung der Kunststoffe bei der Verarbeitung in der Schmelze und unterdrücken den Abbau der Kunststoffe zu Einheiten mit geringerem Molekulargewicht. Gleichzeitig bleibt die Flammwidrigkeit in vollem Umfang erhalten.

Bevorzugt bedeutet M Calcium, Aluminium oder Zink.

Unter protonierten Stickstoffbasen werden bevorzugt die protonierten Basen von Ammoniak, Melamin, Triethanolamin, insbesondere NH₄⁺, verstanden.

Bevorzugt bedeutet R³ Methylen, Ethylen, n-Propylen, iso-Propylen, n-Butylen, tert.-Butylen, n-Pentylen, n-Octylen oder n-Dodecylen.
Bevorzugt bedeutet R³ auch Phenylen oder Naphthylen.

Geeignete Phosphinate sind in der PCT/W097/39053 beschrieben, auf die ausdrücklich Bezug genommen wird.

Besonders bevorzugte Phosphinate sind Aluminium-, Calcium- und Zinkphosphinate.

Erfindungsgemäß sind auch synergistische Kombinationen von den genannten Phosphinaten mit stickstoffhaltigen Verbindungen, die in einer ganzen Reihe von Polymeren als Flammschutzmittel effektiver wirken, als die Phosphinate allein (DE-A-196 14 424, DE-A-197 34 437 und DE-A-197 37 727). Die Flammschutzwirkung der Phosphinate kann durch Kombination mit weiteren Flammschutzmitteln, vorzugsweise stickstoffhaltigen Synergisten oder Phosphor/Stickstoff Flammschutzmitteln verbessert werden.

Bevorzugt handelt es sich bei den stickstoffhaltigen Synergisten um solche der Formeln (III) bis (VIII) oder Gemische davon 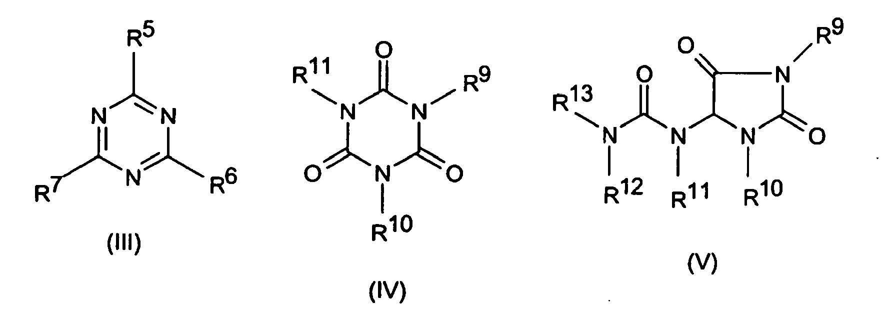 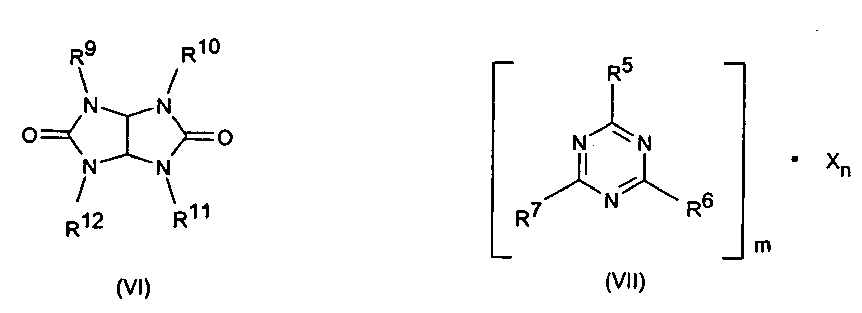 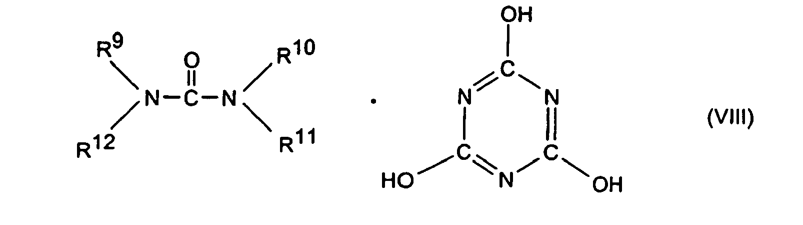 worin
- R⁵ bis R⁷: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder - Arylalkyl, -OR⁸ und -N(R⁸)R⁹, sowie N-alicyclisch oder N-aromatisch,
- R⁸: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder - Arylalkyl,
- R⁹ bis R¹³: xdie gleichen Gruppen wie R⁸ sowie -O-R⁸,
- m und n: unabhängig voneinander 1, 2, 3 oder 4,
- X: Säuren, die Addukte mit Triazinverbindungen (III) bilden können,
bedeuten;
oder um oligomere Ester des Tris(hydroxyethyl)isocyanurats mit aromatischen Polycarbonsäuren.

Bevorzugt handelt es sich bei den stickstoffhaltigen Synergisten um Benzoguanamin, Tris(hydroxyethyl)isocyanurat, Allantoin, Glycouril, Melamin, Melamincyanurat, Dicyandiamid, Guanidin, Carbodiimide, Zinkborat

Bevorzugt handelt es sich bei den Stickstoffsynergisten um Kondensationsprodukte des Melamins. Kondensationsprodukte des Melamins sind z.B. Melem, Melam oder Melon bzw. höher kondensierte Verbindungen dieses Typs sowie Gemische derselben und können z. B. durch ein Verfahren hergestellt werden, wie es in PCT/WO 96/16948 beschrieben ist.

Bevorzugt handelt es sich bei den Phosphor/Stickstoff Flammschutzmitteln um Umsetzungsprodukte des Melamins mit Phosphorsäure oder kondensierten Phosphorsäuren bzw. Umsetzungsprodukte von Kondensationsprodukten des Melamins mit Phosphorsäure oder kondensierten Phosphorsäuren sowie Gemische der genannten Produkte.

Unter den Umsetzungsprodukten mit Phosphorsäure oder kondensierten Phosphorsäuren versteht man Verbindungen, die durch Umsetzung von Melamin oder den kondensierten Melaminverbindungen, wie Melam, Melem oder Melon etc., mit Phosphorsäure entstehen. Beispiele hierfür sind Dimelaminphosphat, Dimelaminpyrophosphat, Melaminphosphat, Melaminpyrophosphat, Melaminpolyphosphat, Melampolyphosphat, Melonpolyphosphat und Melempolyphosphat bzw. gemischte Polysalze, wie sie z.B. in der PCT/WO 98/39306 beschrieben sind.

Besonders bevorzugt handelt es sich bei dem Phosphor/Stickstoff Flammschutzmittel um Melaminpolyphosphat.

Bevorzugt handelt es sich bei den Phosphor/Stickstoff Flammschutzmitteln um stickstoffhaltige Phosphate der Formeln (NH₄)_{y} H_{3-y} PO₄ bzw. (NH₄ PO₃)_{z}, mit y gleich 1 bis 3 und z gleich 1 bis 10.000.

Bevorzugt handelt es sich bei den Phosphor/Stickstoff Flammschutzmitteln um Ammoniumhydrogenphosphat, Ammoniumdihydrogenphosphat oder Ammoniumpolyphosphat.

Den Phosphinaten allein oder in Kombination mit Phosphor/Stickstoff Flammschutzmitteln können Additive zugesetzt werden, wie z.B.:
1. Antioxidantien
   1.1 Alkylierte Monophenole, z.B. 2,6-Di-tert-butyl-4-methylphenol, 2-butyl-4,6-dimethylphenol, 2,6-Di -tert-butyl-4-ethylphenol, 2,6-Di-tert-butyl-4-nbutylphenol, 2,6-Di-tert-butyl-4-iso-butylphenol, 2,6-Di-cyclopentyl-4-methylphenol, 24a-Methyl-cyclohexyl)-4,6-dimethylphenol, 2,6-Di-octadecyl-4-methylphenol, 2,4.6-Tricyclo-hexylphenol, 2,6-Di-tert-butyl-4-methoxymethylphenol, 2,6-Di-nonyl-4-methylphenol, 2,4-Dimethyl-6-(1'-methyl-undec-l'-yl)-phenol, 2,4-Dimethyl-6-(1'-methyl-heptadecyl-phenol, 2,4-Dimethyl-6-(1'-methyl-tridec-I'-yl)-phenol und Mischungen davon.
   1.2 Alkylthiomethylphenole, z.B. 2,4-Di-octylthiomethyl-6-tert-butylphenol, 2,4-Dioctyl-thiomethyl-6-methylphenol, 2,4-Di-octylthiornethyl-6-ethylphenol, 2,6-Didodecyl-thiomethyl-4-nonylphenol.
   1.3 Hydrochinone und alkylierte Hydrochinone, z.B. 2,6-Di-tert-butyl-4-methoxyphenol, 2,5-Di-tert-butyl-hydrochinon, 2,5-DI-tert-amyl-hydrochinon, 2,6-Diphenyl-4-octa-decyloxyphenol, 2,6-Di-tert-butyl-hvdrochinon, 2,5-Di-tertbutyl-4-hydroxyanisol, 3,5-Di-tert-butyl-4-hydroxyanisol, 3,5-Di-lert-butyl-4-hydroxyphenyl-stearat, Bis-(3,5-di-tert-butyl-4-hydroxyphenyl)adipat.
   1.4 Tocopherole, z.B. α-Tocopherol, β-Tocopherol, γ-Tocopherol, δ-Tocopherol und Mischungen davon (Vitamin E).
   1.5 Hydroxylierte Thiodiphenylether, z.B. 2,2'-Thio-bis(6-tert-butyl-4-methylphenol), 2,2'-Thio-bis(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-di-methyl-4-hydroxyphenyl)-disulfic.
   1.6 Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(amethyl-cyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tertbutylphenol), 2,2'-Ethyli-den-bis-(4,6-di-tert-butylphenol), 2.2'-Ethyliden-bis-(6-tert-butyl-4-isobutylphenol), 2,2'-Methylen-bis-[6-(α-methylbenzyl)-4-nonylphenol], 2,2'-Methylen-bis-[6-(α,α-di-methylbenzyl)-4-nonylphenol], 4,4'-Methylen-bis-(2,6-di-tert-butylphenol), 4,4'-Methy-len-bis-(6-tert-bulyl-1-2-methylphenol), 1,1-Bis-(5-tert-butyl-4-hydroxy-2-methyl-phenyl)-butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1, 1-Bis-(5-tert-butyl-4-hydroxy-2-methylphenyl)-3-n-dodecylmercaptobutan, Ethylenglycol-bis-[3,3-bis-'(3'-tertbutyl-4'-hydroxyphenyl)-butyrat], Bis-(3-tert-butyl-4-hydroxy-5-methyl-phenyl)-dicyclo-pentadien, Bis-[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(5-tert-butyl-4-hydroxy-2-methylphenyl)-4-n-dodecylmercaptobutan, 1,1,5,5-Tetra-(5-tert-butyl-4-hydroxy-2-methylphenyl)-pentan.
   1.7 O-, N- und S-Benzylverbindungen, z.B. 3,5,3',5'-Tetra-tert-butyl-4,4'-dihydroxydibenzylether, Octadecyl-4-hydroxy-3.5-dimethylbenzyl-mercaptoacetat, Tris-(3,5-di-tert-butyl-4-hydroxvbenzyl)-amin, Bis-(4-tert-butyl-3-hydroxy-2,6-dimethylbenzyl)-di-thioterephthalat, Bis-(3,5-di-tert-butyl-4-hydroxybenzyl)sulfid, Isooctyl-3,5-di-tert-butyl-4-hydroxybenzyl-mercaptoacetat.
   1.8 Hydroxybenzylierte Malonate, z.B. Dioctadecyl-2,2-bis-(3,5-di-tert-butyl-2-hydrorybenzyl)-malonat, Di-octadecyl-2-(3-tert-butyl-4-hydroxy-5-methylbenzyl)-malonat, Didodecylmercaptoethyl-2,2-bis-(3,5-ditert-butyl-4-hydroxybenzyl)-malonat, Di[4(1,1,3,3-tetramethylbutyl)phenyl], 2,2-bis(3,5-ditert-butyl-4-hydroxybenzyl)-malonat.
   1.9 Hydroxybenzyl-Aromaten, z.B. 1,3,5-Tris-(3,5-di-tert-buty)-4-hydroxybenzyl)-2,4,6-trimethylbenzol, 1,4-Bis-(3,5-di-tert-butyl-4-hydroxybenzyl)-2,3,5,6-tetramethylbenzot 2,4,6-Tris-(3,5-di-tert-buryl-4-hydroxybenzyl)-phenol.
   1.10 Triazinverbindungen, z.B. 2,4-Bis-octylmercapto-6(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris-(3,5-di-tert-butyl-4-hydroxyphenoxy)1,2,3-triazin, 1,3,5-Tris-(3,5-di-tert-butyl-4-hydroxybenzyl)isocyanurat, 1,3,5-Tris(4-tert-butyl-3-hydroxy-2,6-dimethylbenzyl)-iso-cyanurat, 2,4,6-Tris(3,5-di-tert-butyl-4-hydroxyphenylethyl)-1,3,5-triazin, 1,3,5-Tris-(3,5-di-tert-butyl-4-hydroxyphenylpropionyl)hexahydro-1,3,5-triazin, 1,3,5-Tris(3,5-di-cyclohexyl-4-hydroxybenzyl)-isocyanurat.
   1.11 Benzylphosphonate, z.B. Dimethyl-2,5-di-tert-butyl-4-hydroxybenzylphosphonat, Diethyl-3,5-di-tertbutyl-4-hydroxybenzylphosphonat, Dioctadecyl-3,5-di-tert-butyl-4-hydroxybenzylphosphonat, Dioctadecyl-5-tertbutyl-4-hydroxy-3-methylbenzylphos-phonat, Ca-Salz des 3,5-Di-tert-butyl-4-hydroxybenzylphosphonsäure-monoethylesters.
   1.12 Acylaminophenole, 4-Hydroxylaurinsäureamid, 4-Hydroxystearinsäureanilid, N-(3,5-di-tert-butyl-4-hydroxyphenyl)-carbaminsäureoctylester.
   1.13 Ester der β-(3.5-Di-tert-butyl-4-hydroxyphenyl)-propionsäure mit ein- oder mehrwertigen Alkoholen, wie z.B. mit Methanol, Ethanol, Octanol, Octadecanol, 1,6-Hexan-diol, 1,9-Nonandiol, Ethylenglykol, 1,2-Propandiol, Neopentylglycol, Thio-diethylenglycol, Diethylenglykol, Triethylenglycol, Pentaerythrit, Tris(hydroxyethyl)-isocyanurat, N,N'-Bis-(hydroxyethyl)-oxalsäurediamid, 3-Thiaundecanol, 3-Thiapenta-decanol, Trimethylhexandiol, Trimethylolpropan, 4-Hydroxymethyl-1-phospha-2,6,7-trioxabicyclo[222]-octan.
   1.14 Ester der β-(5-tert-Butyl-4-hydroxy-3-methylphenyl)-propionsäure mit ein- oder mehrwertigen Alkoholen, wie z.B. mit Methanol, Ethanol, Octanol, Octadecanol, 1,6-Hexandiol, 1.9-Nonandiol, Ethylenglykol, 12-Propandiol, Neopentylglycol, Thiodiethylenglycol, Diethylenglycol, Triethylenglycol, Pentaerythrit, Tris-(hydroxy)-ethyl-isocyanurat, N,N'-Bis(hydroxyethyl)-oxalsäurediamid, 3-Thiaundecanol, 3-Thia-pentadecanol, Trimethylhexandiol, Trimethylolpropan, 4-Hydroxymethyl-1 -phospha-2,6,7-trioxabicyclo[2-22]octan.
   1.15 Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexan-diol, 1,9-Nonandiol, Ethylenglykol, 1,2-Propandiol, Neopentylglycol, Thiodiethylen-glycol, Diethylenglykol, Triethylenglycol, Pentaerythrit, Tris-(hydroxy)ethyl-iso-cyanurat, N,N'-Bis-(hydroxyethyl)-oxalsäurediamid, 3-Thiaundecanol, 3-Thiapenta-decanol, Trimethylhexandiol, Trimethylolpropan, 4-Hydroxymethyl-1 -phospha-2,6,7-trioxabicyclo-[222]octan.
   1.16 Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxy)ethylisocyanurat, N,N-Bis-(hydroxyethyl)-oxalsäurediamid, 3-Thiaundecanol, 3-Thiapentadecanol, Trimethyl-hexandiol, Trimethylolpropan, 4-Hydroxymethyl-1-phospha-2,6,7-trioxabicyclo- [2-22]-octan.
   1.17 Amide der β-(3,5-Di-tert-butyl-4-hydroxyphenyl)-propionsäure, wie z.B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-ditert-butyl-4-hydroxyphenylpropionyl)-hydrazin.
2. UV-Absorber und Lichtschutzmittel
   2.1 2-(2'-Hydroxyphenyl)-benzotriazole, wie z.B. 2-(2'-Hydroxy-5'-methylphenyl)-benzotriazol, 2-(3',5'-Ditert-butyl-2'-hydroxyphenyl)-benzotriazol. 2-(5'-tert-Butyl-2'-hydroxyphenyl)-benzotriazol, 2-(2'-Hydroxy-5'-(1,1.3,3-tetramethylbutyl)phenyl)-benzotriazol, 2-(3',5'-Di-tert-butyl-2'-hydroxyphenyl)-5-chlor-benzotriazol, 2-(3-tert-Butyl-2'-hydroxy-5'-methylphenyl)-5-chlorbenzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5, -Di-tert-amyl-2'-hydroxyphenyl)-benzotriazol, 2-(3',5'-Bis(α,α-dimethylbenzyl-2'-hydroxyphenyl)-benzotriazol, Mischung aus 2-(3'-tert-Butyl-2' -hydroxy-5'-(2-octyloxycarbonylethyl)phenyl)-5-chlor-benzotriazol, 2-(3'-tert-Butyl-5'-[2-(2-ethyl-hexyloxy)-carbonylethyl]-2'hydroxyphenyl)-5-chlor-benzotriazol, 2-(3'-tert-Butyl-2'-hydroxy5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyl-oxy)carbonylethyl]-2'-hydroxyphenyl)-benzotriazol, 2-(3'-Dodecyl2'hydroxy-5'-methylphenyl)-benzotriazol und 2-(3'-tert-Butyl-2'-hydroxy-5'-(2-isooctyloxycarbonyl-ethyl)phenyl-benzotriazol, 2,2'-Methylen-bis[4(1,1,3,3-tetramethylbutyl)-6-benzotria-zol-2-yl-phenol]; Umesterungsprodukt von 2-[3-tert-Butyl-5'-(2-methoxycarbonyl-ethyl)-2'-hydroxy-phenyl]-benzotriazol mit Polyethylenglycol 300, [R-CH₂CH₂-COO(CH₂)₃]₂- mit R = 3'-tert-Butyl-4'hydroxy 5'-2H benzotriazol-2-yl-phenyl.
   2.2 2-Hydroxybenzophenone, wie z.B. das 4-Hydroxy, 4-Methoxy, 4-Octoxy, 4-Decyloxy-, 4-Dodecyloxy-, 4-Benzyloxy-, 4,2',4-Trihydroxy-, 2'-Hydroxy-4,4'dimethoxy-Derivat.
   2.3 Ester von gegebenenfalls substituierten Benzoesäuren, wie z.B. 4-tert-Butylphenylsalicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäureoctadecylester, 3,5-Di-tert-butyl-4-hydroxybenzoe-säure-2-methyl-4,6-di-tertbutylphenylester.
   2.4 Acrylate, wie z.B. α-Cyan-β,β-diphenylacrylsäure-ethylester bzw. -isooctylester, α-Carbomethoxy-zimtsäuremethylester, α-Cyano-β-methyl-p-methoxyzimtsäuremethyl-ester bzw. -butylester, α-Carbomethoxy-p-methoxyzimtsäuremethylester, N-(β-Carbo-methoxy-β-cyanovinyl)-2-methyl-indolin.
   2.5 Nickelverbindungen, wie z.B. Nickelkomplexe des 2,2'-Thio-bis-[4(1,1,3,3-tetramethylbutyl)phenols], wie der 1:1- oder der 1:2-Komplex, gegebenenfalls mit zusätzlichen Liganden, wie n-Butylamin, Triethanolamin oder N-Cyclohexyldiethanolamin, Nickeldibutyldithiocarbamat, Nickelsalze von 4-Hydroxy-3,5-ditert-butylbenzylphosphonsäure-monoalkylestern, wie vom Methyl- oder Ethylester, Nickelkomplexe von Ketoximen, wie von 2-Hydroxy-4-methylphenyl-undecylketoxim, Nickelkomplexe des 1-Phenyl-4-lauroyl-5-hydroxypyrazols, gegebenenfalls mit zusätzlichen Liganden.
   2.6 Sterisch gehinderte Amine, wie z.B. Bis-(2,2,6,6-tetramethyl-piperidyl)-sebacat, Bis-(2,2,6,6-tetramethylpiperidyl)-succinat, Bis-(1,2,2,6,6-pentamethylpiperidyl)-sebacat, n-Butyl-3,5-di-tert-butyl-4-hydroxybenzylmalonsäure-bis(1,2,2,6,6-pentamethyl-piperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert-Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetra-methylpiperazinon), 4-Benzoyl-2,2,6,6-tetramethylpiperidin, 4-Stearyloxy-2,2,6,6 tetramethylpiperidin, Bis-(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5)decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis-(3-aminopropylamino)ethan, Kondensationsprodukt aus 2-Chlor-4,6-di-(4-n-butylamino-1 ,2,2,6,6-pentamethylpiperidyl)-1,3,5-triazin und 1,2-Bis-(3-aminopropylamino)-ethan, 8-Acetyl-3-dodecyl-7,7,9,9-tetramethyl-1,3,8-triazaspiro[4.5]decan-2,4-dion, 3-Dodecy)-1 -(2,2,6,6-tetramethy)-4-piperidyt)pyrrotidin-2,5-dion, 3-Dodecyl-1-(1,2,2,6,6-pentamethyl-4-piperidyl)-pyrrolidin-2,5-dion.
   2.7 Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'di-tert-butyloxanilid, 2-Ethoxy-2'-ethyl-oxanilid, N,N'-Bis-(3-dimethylaminopropyl)-oxalamid,2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxysowie von o- und p-Ethoxy-di-substituierten Oxaniliden.
   2.8 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxy-phenyl)-4,6-bis(2,4-dimethylphenyl)-1,3,5-triazin, 2-[2-hydroxy-4-(2-hydroxy-3-butyl-oxypropyloxy)phenylJ-4,6-bis(2,4-dimethylphenyl)-1,3,5-triazin, 2[2-hydroxy-4-(2-hydroxy-3-octyloxy-propyloxy)phenylJ-4,6-bis(2,4-dimethylphenyl)-1,3,5-triazin.
3. Metalldesaktivatoren, wie z.B. N,N' -Diphenyloxalsäurediamid, N-Salicylal-N'salicyloylhydrazin, N,N'-Bis-(salicyloyl)-hydrazin, N,N'-Bis-(3,5-di-tert-butyl-4-hydroxyphenylpropionyl)-hydrazin, 3-Salicyloylamino- 1,2,4-triazol, Bis-(benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäuredihydrazid.
4. Phosphite und Phosphonite, wie z.B. Triphenylphosphit, Diphenylalkylphosphite, Phenyldialkylphosphite, Tris-(nonylphenyl)-phosphit, Trilaurylphosphit, Triocta-decylphosphit, Distearyl-pentaerythritdiphosphit, Tris-(2,4-di-tert-butylphenyl)-phosphit, Diisodecylpentaerythrit-diphosphit, Bis-(2,4-di-tert-butylphenyl)-penta-erythritdiphosphit, Bis-(2,6-di-tert-butyl-4-methylphenyl)-pentaerythritdiphosphit, Bis-isodecyloxy-pentaerythritdiphosphit, Bis-(2,4-di-tert-butyl-6-methylphenyl)-penta-erythritdiphosphit, Bis-(2,4,6-tri-tertbutylphenyl)-pentaerythritdiphosphit, Tristearyl-sorbit-triphosphit, Tetrakis-(2,4-di-tert-butylphenyl)-4,4'-biphenylen-diphosphonit, 6-Isooctyloxy-2,4,8,10-tetratert-butyl-12H-dibenz[d,g]-1,3,2-dioxaphosphocin, 6-Fluor-2,4,8,10-tetra-tertbutyl-12-methyl-dibenz[d,g]-1,3,2-dioxaphosphocin, Bis-(2,4-di-tert-butyl-6-methylphenyl)-methylphosphit, Bis-(2,4-di-tert-butyl-6-methyl-phenyl)-ethylphosphit.
5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zinkdibutyl-dithiocarbamat, Dioctadecyldisulfid, Pentaerythrit-tetrakis-(β-dodecylmercapto)-propionat.
6. Polyamidstabilisatoren, wie z.B. Kupfersalze in Kombination mit Jodiden und/oder Phosphorverbindungen und Salze des zweiwertigen Mangans.
7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.
8. Nukleierungsmittel, wie z.B.0 4-tert-Butylbenzoesäure, Adipinsäure, Diphenylessigsäure.
9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit.
10. Sonstige Zusätze. wie z.B. Weichmacher, Blähgraphit, Gleitmittel, Emulgatoren, Pigmente, optische Aufheller, Flammschutzmittel, Antistatika, Treibmittel, Blähgraphit.

Diese zusätzlichen Additive können vor, zusammen mit oder nach Zugabe der Flammschutzmittel den Polymeren zugegeben werden. Die Dosierung sowohl dieser Additive wie auch die der Flammschutzmittel kann dabei als Feststoff, in Lösung oder Schmelze sowie auch in Form von festen oder flüssigen Mischungen oder Masterbatches/Konzentraten erfolgen.

Bevorzugt handelt es sich bei den Metalloxiden um Magnesiumoxid, Calciumoxid, Aluminiumoxid, Zinkoxid, Manganoxid und/oder Zinnoxid.

Bevorzugt handelt es sich bei den Hydroxiden um Aluminiumhydroxid, Böhmit, Magnesiumhydroxid, Hydrotalcit, Hydrocalumit, Calciumhydroxid, Zinkhydroxid, Zinnoxidhydrat und/oder Manganhydroxid.

Bevorzugt handelt es sich bei der Komponente C um Zinkborat, basisches Zinksilikat oder Zinkstannat.

Besonders bevorzugt handelt es sich bei Komponente C um Magnesiumhydroxid, Zinkoxid, Dihydrotalcit oder Böhmit.

Geeignet als Komponente D sind Phosphonite der allgemeinen Struktur
R-[P(OR₁)₂]ₘ (I)
wobei
- R: ein ein- oder mehrwertiger aliphatischer, aromatischer oder hetero-aromatischer organischer Rest sein kann und
- R₁: eine Verbindung der Struktur (II) 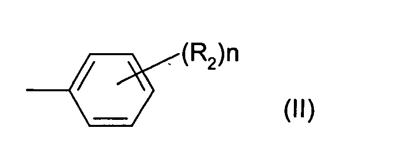 ist oder die beiden Reste R₁ eine verbrückende Gruppe der Struktur (III) bilden 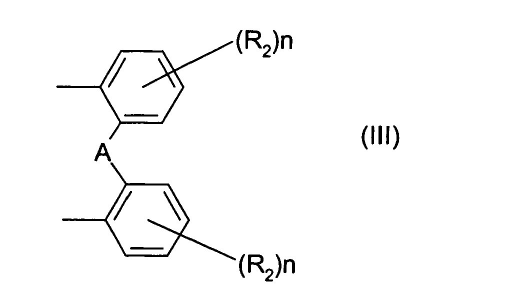 mit
- A: direkter Bindung, O, S, C₁₋₁₈ alkylen (linear oder verzweigt), C₁₋₁₈ alkyliden (linear oder verzweigt), in denen
- R₂: unabhängig voneinander C₁₋₁₂ alkyl (linear oder verzweigt), C₁₋₁₂ alkoxy, C₅₋₁₂ cycloalkyl bedeuten und
- n: 0 bis 5 sowie
- m: 1 bis 4 betragen kann.

Bevorzugt sind die Reste
- R: C₄₋₁₈ alkyl (linear oder verzweigt), C₄₋₁₈ alkylen (linear oder verzweigt), C₅₋₁₂ cycloalkyl, C₅₋₁₂ cycloalkylen, C₆₋₂₄ aryl bzw. heteroaryl, C₆₋₂₄ arylen bzw. heteroarylen welche auch weiter substituiert sein können;
- R₁: eine Verbindung der Struktur (II) oder (III) mit
- R₂: unabhängig voneinander C₁₋₈ alkyl (linear oder verzweigt), C₁₋₈ alkoxy, cyclohexyl;
- A: direkte Bindung, O, C₁₋₈ alkylen (linear oder verzweigt), C₁₋₈ alkyliden (linear oder verzweigt) und
- n: 0 bis 3
- m: 1 bis 3.

Besonders bevorzugt sind die Reste
- R: Cyclohexyl, Phenyl, Phenylen, Biphenyle und Biphenyle
- R₁: eine Verbindung der Struktur (II) oder (III) mit
- R₂: unabhängig voneinander C₁₋₈ alkyl (linear oder verzweigt), C₁₋₈ alkoxy, cyclohexyl
- A: direkte Bindung, O, C₁₋₆ alkyliden (linear oder verzweigt) und
- n: 1 bis 3
- m: 1 oder 2.

Weiterhin werden Gemische von Verbindungen gem. obiger Ansprüche in Kombination mit Phosphiten der Formel (IV) beansprucht, wobei R₁ die oben angegebenen Bedeutungen hat
P(OR₁)₃ (IV)

Insbesondere bevorzugt sind Verbindungen, die, basierend auf obigen Ansprüchen, durch eine Friedel-Crafts-Reaktion eines Aromaten oder Heteroaromaten, wie Benzol, Biphenyl oder Diphenylether mit Phosphortrihalogeniden, bevorzugt Phosphortrichlorid, in Gegenwart eines Friedel-Crafts-Katalysators wie Aluminiumchlorid, Zinkchlorid, Eisenchlorid etc. sowie nachfolgender Reaktion mit den der Strukturen (II) und (III) zugrundeliegenden Phenolen, hergestellt werden. Dabei werden ausdrücklich auch solche Gemische mit Phosphiten eingeschlossen, die nach der genannten Reaktionssequenz aus überschüssigem Phosphortrihalogenid und den vorstehend beschriebenen Phenolen entstehen.

Aus dieser Gruppe von Verbindungen sind wiederum die nachstehenden Strukturen (V) und (VI) bevorzugt: 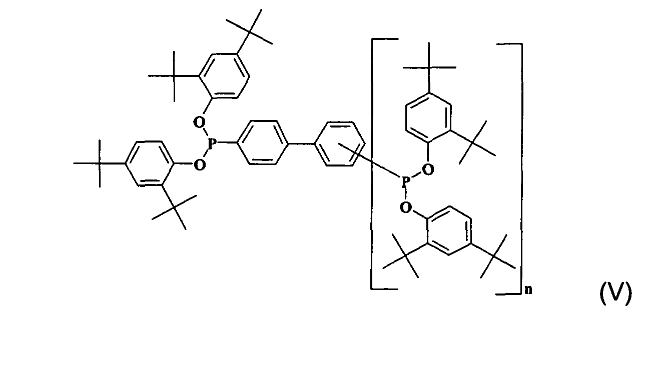 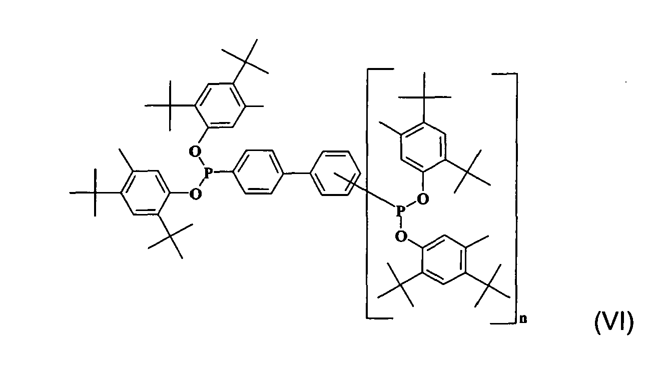 wobei n 0 oder 1 betragen kann und diese Gemische optional weiterhin noch Anteile der Verbindung (VII) bzw. (VIII) enthalten können:

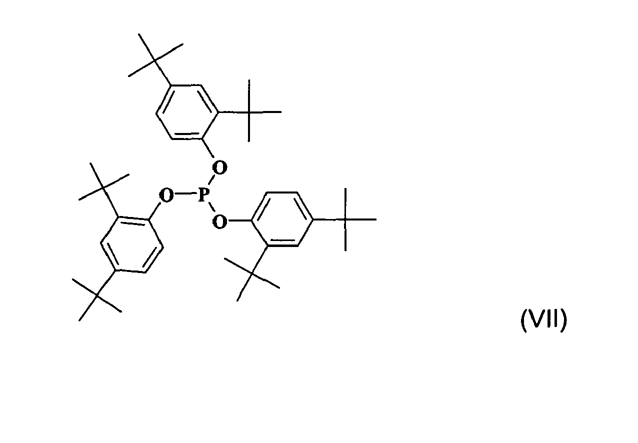

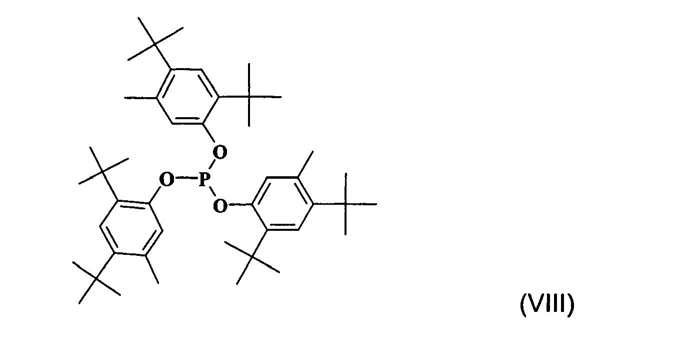

Geeignet als Komponente E sind Ester oder Salze von langkettigen aliphatischen Carbonsäuren (Fettsäuren), die typischerweise Kettenlängen von C₁₄ bis C₄₀ aufweisen. Bei den Estern handelt es sich um Umsetzungsprodukte der genannten Carbonsäuren mit gebräuchlichen mehrwertigen Alkoholen, wie z. B. Ethylenglykol, Glycerin, Trimethylolpropan oder Pentaerythrit. Als Salze der genannten Carbonsäuren kommen vor allem Alkali- oder Erdalkalisalze bzw. Aluminium- und Zinksalze in Betracht.

Bevorzugt handelt es sich bei der Komponente E um Ester oder Salze der Stearinsäure wie z.B. Glycerinmonostearat oder Calciumstearat.

Bevorzugt handelt es sich bei der Komponente E um Umsetzungsprodukte von Montanwachssäuren mit Ethylenglykol.

Bevorzugt handelt es sich bei den Umsetzungsprodukten um eine Mischung aus Ethylenglykol-Mono-Montanwachssäureester, Ethylenglykol-dimontanwachssäureester, Montanwachssäuren und Ethylenglykol.

Bevorzugt handelt es sich bei der Komponente E um Umsetzungsprodukte von Montanwachssäuren mit einem Calciumsalz.

Besonders bevorzugt handelt es sich bei den Umsetzungsprodukten um eine Mischung aus 1,3-Budandiol-Mono-Montanwachssäureester, 1,3-Budandiol-Di-Montanwachssäureester, Montanwachssäuren, 1,3-Butandiol, Calciummontanat, und dem Calciumsalz.

Geeignet als Komponente F sind Carboxyl(ester)amide.

Bevorzugt handelt es sich bei der Komponente F um ein Derivat eines aromatischen Di- oder Tri-carboxyl(ester)amids.

Bevorzugt handelt es sich bei dem Derivat um N,N'-bis-piperidinyl-1 ,3-benzoldicarboxamid.

Besonders bevorzugt handelt es sich bei dem Derivat um N,N'-bis(2,2,6,6-tetramethyl-4-piperidinyl)-1,3-benzoldicarboxamid.

Besonders bevorzugt enthält die Flammschutzmittel-Stabilisator-Kombination 50 bis 77,9 Gew.-% der Komponente A, 20 bis 47,9 Gew.-% der Komponente B und 2 bis 20 Gew.-% der Komponente C, 0 bis 3 Gew. % Komponente D, 0 bis 3 Gew. % Komponente E und 0,1 bis 4 Gew.-% der Komponente F.

Die erfindungsgemäße Flammschutzmittel-Stabilisator-Kombination kann auch Carbodiimide enthalten.

Die Erfindung betrifft auch eine flammfest ausgerüstete Kunststoff-Formmasse, enthaltend die erfindungsgemäße Flammschutzmittel-Stabilisator-Kombination.

Bevorzugt handelt es sich bei dem Kunststoff um thermoplastischen Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe.

Besonders bevorzugt handelt es sich bei dem Kunststoff um Polyamide, Polyester und PPE/HIPS-Blends.

Bevorzugt wird die Flammschutzmittel-Stabilisator-Kombination in der Kunststoff-Formmasse in einer Gesamtmenge von 2 bis 50 Gew.-%, bezogen auf die Kunststoff-Formmasse, eingesetzt.

Besonders bevorzugt wird die Flammschutzmittel-Stabilisator-Kombination in der Kunststoff-Formmasse in einer Gesamtmenge von 10 bis 30 Gew.-%, bezogen auf die Kunststoff-Formmasse, eingesetzt.

Die Erfindung betrifft schließlich auch Polymer-Formkörper, -Filme, -Fäden und - Fasern enthaltend die erfindungsgemäße Flammschutzmittel-Stabilisator-Kombination.
Die Polymer-Formkörper, -Filme, -Fäden und -Fasern sind dadurch gekennzeichnet, dass es sich um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester und/oder ABS handelt.

Bevorzugt enthalten die Polymer-Formkörper, -Filme, -Fäden und -Fasern die Flammschutzmittel-Stabilisator-Kombination in einer Gesamt-Menge von 2 bis 50 Gew.-%, bezogen auf den Polymergehalt.

Besonders bevorzugt enthalten die Polymer-Formkörper, -Filme, -Fäden und - Fasern die Flammschutzmittel-Stabilisator-Kombination in einer Gesamt-Menge von 10 bis 30 Gew.-%, bezogen auf den Polymergehalt.

In einer besondern Ausführungsform enthalten die Polymer-Formkörper, -Filme, - Fäden und -Fasern 2 bis 30 Gew.-% der Flammschutzmittel-Stabilisator-Kombination, bestehend aus 50 bis 80 Gew.-% der Komponente A, aus 20 bis 50 Gew.-% der Komponente B, aus 2 bis 20 Gew.-% der Komponente C, aus 0 bis 3 Gew. % Komponente D, 0 bis 3 Gew. % Komponente E und 0,1 bis 3 Gew.-% der Komponente F, bezogen auf den Polymergehalt

In einer besondern Ausführungsform enthalten die Polymer-Formkörper, -Filme, - Fäden und -Fasern 2 bis 30 Gew.-% der Flammschutzmittel-Stabilisator-Kombination, bestehend aus 60 bis 98 Gew.-% der Komponente A und 2 bis 40 Gew.-% der Komponente C, 0 bis 1 Gew. % Komponente D, 0 bis 1 Gew. % Komponente E und 0,1 bis 1 Gew.-% der Komponente F bezogen auf den Polymergehalt.

Die vorgenannten Additive können in den verschiedensten Verfahrensschritten in den Kunststoff eingebracht werden. So ist es bei Polyamiden oder Polyestern möglich, bereits zu Beginn oder am Ende der Polymerisation/Polykondensation oder in einem folgenden Compoundierprozess die Additive in die Polymerschmelze einzumischen. Weiterhin gibt es Verarbeitungsprozesse bei denen die Additive erst später zugefügt werden. Dies wird insbesondere beim Einsatz von Pigment- oder Additivmasterbatches praktiziert. Außerdem besteht die Möglichkeit, insbesondere pulverförmige Additive auf das durch den Trocknungsprozess eventuell warme Polymergranulat aufzutrommeln.

Bevorzugt liegt die Flammschutzmittel-Stabilisator-Kombination als Granulat, Schuppen, Feinkorn, Pulver und/oder Micronisat vor.

Bevorzugt liegt die Flammschutzmittel-Stabilisator-Kombination als physikalische Mischung der Feststoffe, als Schmelzmischung, als Kompaktat, als Extrudat oder in Form eines Masterbatches vor.

Bevorzugt wird die Mischung in einer Formmasse eines Polyamides oder eines Polyesters verwendet. Geeignete Polyamide sind z.B. in der DE-A-199 20 276 beschrieben.

Bevorzugt handelt es sich bei den Polyamiden um solche vom Aminosäure-Typ und/oder vom Diamin-Dicarbonsäure-Typ.

Bevorzugt handelt es sich bei den Polyamiden um Polyamid 6 und/oder Polyamid 66.

Bevorzugt sind die Polyamide unverändert, gefärbt, gefüllt, ungefüllt, verstärkt, unverstärkt oder auch anders modifiziert.

Bevorzugt handelt es sich bei den Polyestern um Polyethylenterephthalat oder Polybutylenterephthalat.

Bevorzugt sind die Polyester unverändert, gefärbt, gefüllt, ungefüllt, verstärkt, unverstärkt oder auch anders modifiziert.

Zusätzlich können Carbodiimide enthalten sein.

### Beispiele

### 1. Eingesetzte Komponenten

### Handelsübliche Polymere (Granulate):

Polyamid 6.6 (PA 6.6-GV): ®Durethan A 30 (Fa. Bayer AG, D)
Glasfasern ®Vetrotex 983 EC 10 4,5 mm (Fa. Saint-Gobain-Vetrotex, D)

### Flammschutzmittel (Komponente A):

Aluminiumsalz der Diethylphosphinsäure, im folgenden als DEPAL bezeichnet.

### Synergist (Komponente B):

®Melapur 200 (Melaminpolyphosphat), im folgenden als MPP bezeichnet, Fa. DSM Melapur, NL

### Komponente C:

Zinkoxid aktiv, Bayer AG, D
Zinkborat ®Firebrake ZB, Borax, USA
Magnesiumhydroxid ®Magnifin H 10, Martinswerk, D
Dihydrotalcit DHT 4A, Kyowa Chemicals, Japan

Phosphonite (Komponente D): Sandostab® P-EPQ® , Fa. Clariant GmbH, D

### Wachskomponenten (Komponente E):

®Licomont CaV 102, Clariant GmbH, D (Ca-Salz der Montanwachssäure)

Aromatische di- oder tri-carboxylester bzw. -amide (Komponente F):

Nylostab® S-EED® , Fa. Clariant GmbH, D
(* Nylostab S-EED entspricht N,N'-bis(2,2,6,6-tetramethyl-4-piperidinyl)-1,3-benzoldicarboxamid)

### 2. Herstellung, Verarbeitung und Prüfung von flammhemmenden Kunststoff-Formmassen

Die Flammschutzmittelkomponenten wurden in dem in der Tabelle angegebenen Verhältnis mit dem Phosphonit, den Gleitmitteln und Stabilisatoren vermischt und über den Seiteneinzug eines Doppelschnecken-Extruders (Typ Leistritz ZSE 27/44D) bei Temperaturen von 260 bis 310°C in PA 6.6 eingearbeitet. Die Glasfasern wurden über einen zweiten Seiteneinzug zugegeben. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320 C Allrounder) bei Massetemperaturen von 270 bis 320°C zu Prüfkörpern verarbeitet und anhand des UL 94-Tests (Underwriter Laboratories) auf Flammwidrigkeit geprüft und klassifiziert.

Die Fließfähigkeit der Formmassen wurde durch Ermittlung des Schmelzvolumenindex (MVR) bei 275°C/2,16 kg bestimmt. Ein starker Anstieg des MVR-Wertes deutet auf einen Polymerabbau hin.

Sämtliche Versuche der jeweiligen Serie wurden, falls keine anderen Angaben gemacht wurden, aufgrund der Vergleichbarkeit unter identischen Bedingungen (Temperaturprogramme, Schneckengeometrien, Spritzgießparameter, etc.), durchgeführt.

Die Rezepturen V-1 bis V-5 sind Vergleichsbeispiele, in denen eine Flammschutzmittel-Kombination, basierend auf dem Aluminiumsalz der Diethylphosphinsäure (DEPAL) und dem stickstoffhaltigen Synergisten Melaminpolyphosphat (MPP) und dem Metalloxid bzw. -borat allein verwendet wurden.

Die Ergebnisse, in denen die Flammschutzmittel-Stabilisator-Mischung gemäß der Erfindung eingesetzt wurden, sind in Beispiel B1 aufgelistet. Alle Mengen sind als Gew.-% angegeben und beziehen sich auf die Kunststoff-Formmasse einschließlich der Flammschutzmittel-Kombination und Zusatzstoffen.

**Tabelle 1: Versuchsergebnisse. V1-5 sind Vergleichsbeispiele, B1 ist erfindungsgemäße Flammschutz-Stabilisator-Mischung**

| | V-1 | V-2 | V-3 | V-4 | V-5 | B-1 |
|---|---|---|---|---|---|---|
| Polyamid 66 | 55 | 54 | 54 | 54 | 54 | 54 |
| Glasfasern | 30 | 30 | 30 | 30 | 30 | 30 |
| A: Depal | 10 | 10 | 10 | 10 | 10 | 10 |
| B: MPP | 5 | 5 | 5 | 5 | 5 | 5 |
| C: Zinkoxid | | 1 | | | | |
| C: Zinkborat | | | 1 | 0,5 | 0,5 | 0,5 |
| E: CaV 102 | | | | 0,5 | | |
| D: P-EPQ | | | | | 0,5 | |
| F: S-EED | | | | | | 0,5 |
| UL 94 1,6 mm | V-0 | V-0 | V-0 | V-0 | V-0 | V-0 |
| MVR 275°C/2,16 kg | 5 | 12 | 10 | 6 | 6 | 5 |
| Reißdehnung [%] | 5,3 | 3,6 | 4,2 | 4,8 | 5,0 | 5,3 |
| Farbe | grau | weiß | weiß | weiß | weiß | weiß |
| Schlagzähigkeit [kJ/m²] | 68 | 37 | 54 | 61 | 63 | 66 |
| Kerbschlagzähigkeit [kJ/m²] | 10,8 | 7,1 | 9,2 | 9,4 | 9,7 | 11 |

Aus den Beispielen geht hervor, dass die erfindungsgemäßen Zusätze (Mischung aus den Komponenten Phosphinat, Stickstoffsynergist und Oxid bzw. Borat sowie Komponente D, E oder F) die Verarbeitbarkeit der Polymere und die Eigenschaften der Spritzgusskörper eindeutig verbessert, ohne die Flammschutzwirkung zu beeinträchtigen.

Die Einarbeitung der Flammschutzmittel Depal und MPP in PA 6.6 führt zu einer Grau-Verfärbung der Formmassen (V1). Durch die Zugabe von Zinkoxid oder Zinkborat kann die Grauverfärbung verhindert werden, die mechanischen Werte gehen aber deutlich zurück (V2, V3).

Wird nun eine erfindungsgemäße Flammschutzmittel-Stabilisator-Kombination aus Phosphinat, Stickstoffsynergist, Borat und Calciumsalz der Montanwachssäure (V1) eingesetzt, so resultiert neben der Flammwidrigkeit auch keine Verfärbung und gute mechanische Eigenschaften. Am geringen MVR Wert ist zu erkennen, das es nicht zu Polymerabbau kommt. Bei Verwendung von Phosphonit (B2) und Nylostab S-EED ist ebenfalls Flammwidrigkeit, keine Verfärbung sowie gute mechanische Werte zu erkennen. Überraschend sind die hohe Schlagzähigkeit und Kerbschlagzähigkeit bei Verwendung von Nylostab S-EED.

## Patentansprüche

1. Flammschutzmittel-Stabilisator-Kombination für thermoplastische Polymere, enthaltend als Komponente A 25 bis 89,8 Gew.-% eines Phosphinsäuresalzes der Formel (I) und/oder eines Diphosphinsäuresalzes der Formel (II) und/oder deren Polymere, 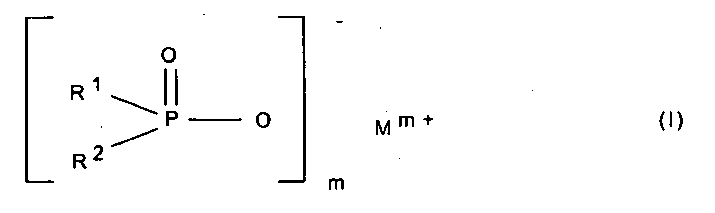 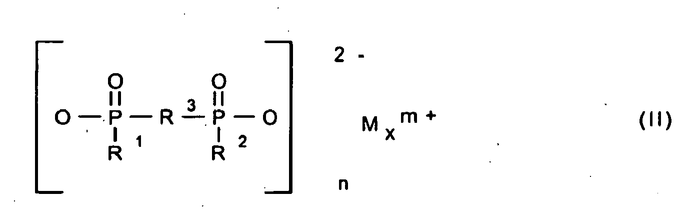 worin
R¹, R² gleich oder verschieden sind und Methyl, Ethyl, n-Propyl, iso-Propyl, n-Butyl, tert.-Butyl, n-Pentyl und/oder Phenyl
R³ C₁-C₁₀-Alkylen, linear oder verzweigt, C₆-C₁₀-Arylen, -Alkylarylen oder -Arylalkylen;
M Mg, Ca, Al, Sb, Sn, Ge, Ti, Zn, Fe, Zr, Ce, Bi, Sr, Mn, Li, Na, K und/oder eine protonierte Stickstoffbase;
m 1 bis 4;
n 1 bis 4;
x 1 bis 4 bedeuten,
als Komponente B 10 bis 74,8 Gew.-% eines stickstoffhaltigen Synergisten oder eines Phosphor/Stickstoff Flammschutzmittels, als Komponente C 0,1 bis 50 Gew.-% eines basischen oder amphoteren Oxides, Hydroxides, Carbonates, Silikates, Borates, Stannates, gemischten Oxid-Hydroxides, Oxid-Hydroxid-Carbonates, Hydroxid-Silikates oder Hydroxid-Borates oder Mischungen dieser Stoffe, als Komponente D 0 bis 5 Gew.-%. eines Phosphonits der allgemeinen Struktur
R-[P(OR₁)₂]ₘ (I)
wobei
R ein ein- oder mehrwertiger aliphatischer, aromatischer oder hetero-aromatischer organischer Rest ist und
R₁ eine Verbindung der Struktur (II) 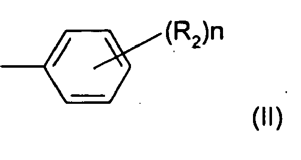 ist oder die beiden Reste R₁ eine verbrückende Gruppe der Struktur (III) bilden 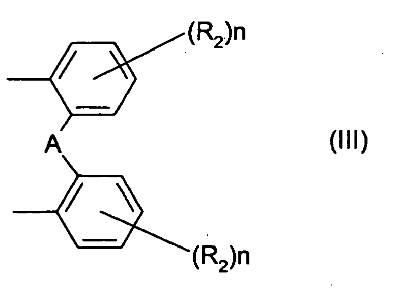 mit
A direkter Bindung, O, S, C₁₋₁₈ alkylen (linear oder verzweigt), C₁₋₁₈ alkyliden (linear oder verzweigt), in denen
R₂ unabhängig voneinander C₁₋₁₂ alkyl (linear oder verzweigt), C₁₋₁₂ alkoxy, C₅₋₁₂ cycloalkyl bedeuten und
n 0 bis 5 sowie
m 1 bis 4 bedeutet,
als Komponente E 0 bis 5 Gew.-% eines Esters oder Salzes der Montanwachssäure und als Komponente F 0,1 bis 5 Gew.-% eines N,N'-bis-piperidinyl-1,3-benzoldicarboxamid und/oder N,N'-bis(2,2,6,6-tetramethyl-4-piperidinyl)-1,3-benzoldicarboxamid, wobei die Summe der Komponenten immer 100 Gew.% beträgt.

2. Flammschutzmittel-Stabilisator-Kombination nach Anspruch 1, **dadurch gekennzeichnet, dass** R³ Methylen, Ethylen, n-Propylen, iso-Propylen, n-Butylen, tert.-Butylen, n-Pentylen oder n-Octylen bedeutet.

3. Flammschutzmittel-Stabilisator-Kombination nach einem oder mehreren der Ansprüche 1 bis 2, **dadurch gekennzeichnet, dass** es sich bei der Komponente B um Kondensationsprodukte des Melamins, wie Melem, Melam, Melon und/oder höherkondensierte Verbindungen davon handelt.

4. Flammschutzmittel-Stabilisator-Kombination nach einem oder mehreren der Ansprüche 1 bis 3, **dadurch gekennzeichnet, dass** es sich bei der Komponente B um Dimelaminpyrophosphat, Melaminpolyphosphat, Melempolyphosphat, Melampolyphosphat, Melonpolyphosphat und/oder gemischte Polysalze dieses Typs handelt.

5. Flammschutzmittel-Stabilisator-Kombination nach einem oder mehreren der Ansprüche 1 bis 4, **dadurch gekennzeichnet, dass** es bei den Phosphor/Stickstoff Flammschutzmitteln um stickstoffhaltige Phosphate der Formeln (NH₄)_{y} H_{3-y} PO₄ bzw. (NH₄ PO₃)_{z}, mit y gleich 1 bis 3 und z gleich 1 bis 10.000, handelt.

6. Flammschutzmittel-Stabilisator-Kombination nach einem oder mehreren der Ansprüche 1 bis 4, **dadurch gekennzeichnet, dass** es sich bei den stickstoffhaltigen Synergisten um solche der Formeln (III) bis (VIII) oder Gemische davon handelt. 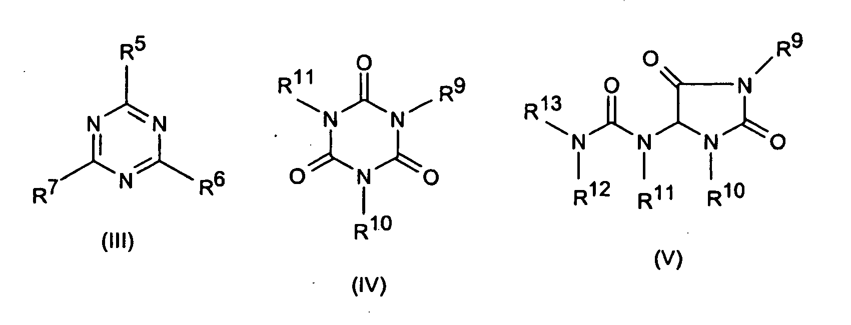 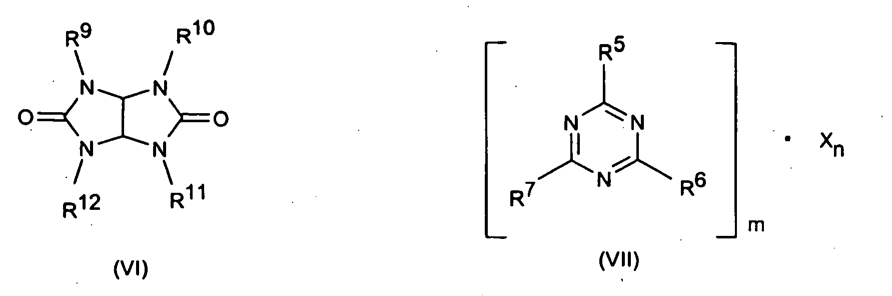 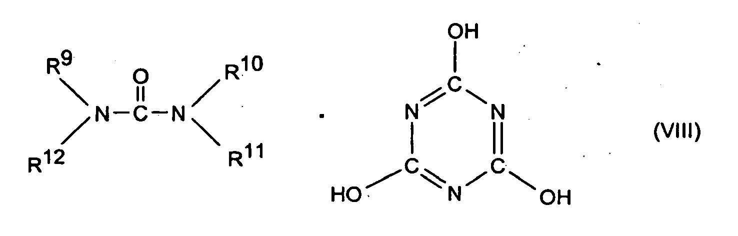 worin
R⁵ bis R⁷ Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
R⁸ Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4, '
X Säuren, die Addukte mit Triazinverbindungen (III) bilden können,
bedeuten;
oder um oligomere Ester des Tris(hydroxyethyl)isocyanurats mit aromatischen Polycarbonsäuren, handelt.

7. Flammschutzmittel-Stabilisator-Kombination nach einem oder mehreren der Ansprüche 1 bis 6, **dadurch gekennzeichnet, dass** es sich bei den stickstoffhaltigen Synergisten um Benzoguanamin, Tris(hydroxyethyl)iso-cyanurat, Allantoin, Glycouril, Melamin, Melamincyanurat, Dicyandiamid und/oder Guanidin handelt.

8. Flammschutzmittel-Stabilisator-Kombination nach einem oder mehreren der Ansprüche bis 7, **dadurch gekennzeichnet, dass** es sich bei der Komponente C um Magnesiumoxid, Calciumoxid, Aluminiumoxid, Zinkoxid, Manganoxid und/oder Zinnoxid; um Aluminiumhydroxid, Böhmit, Dihydrotalcit, Hydrocalumit, Magnesiumhydroxid, Calciumhydroxid, Zinkhydroxid, Zinnoxidhydrat, Manganhydroxid, Zinkborat, basisches Zink-Silikat oder Zinkstannat handelt.

9. Flammschutzmittel-Stabilisator-Kombination nach einem oder mehreren der Ansprüche 1 bis 8, **dadurch gekennzeichnet, dass** sie 50 bis 77,9 Gew.-% der Komponente A, 20 bis 47,9 Gew.-% der Komponente B und 2 bis 20 Gew.-% der Komponente C, 0 bis 3 Gew. % Komponente D, 0 bis 3 Gew. % Komponente E und 0,1 bis 4 Gew.-% der Komponente F enthält.

10. Flammfest ausgerüstete Kunststoff-Formmasse, enthaltend eine Flammschutzmittel-Stabilisator-Kombination gemäß einem oder mehreren der Ansprüche 1 bis 9.

11. Flammfest ausgerüstete Kunststoff-Formmasse gemäß Anspruch 10, **dadurch gekennzeichnet, dass** es sich bei dem Kunststoff um thermoplastischen Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe handelt.

12. Flammfest ausgerüstete Kunststoff-Formmasse nach anspruch 11, **dadurch gekennzeichnet, dass** sie die Flammschutzmittel-Stabilisator-Kombination in einer Menge von 2 bis 50 % Gew.-%, bezogen auf die Kunststoff-Formmasse, enthält.

13. Polymer-Formkörper, -Filme, -Fäden und -Fasern enthaltend eine Flammschutzmittel-Stabilisator-Kombination gemäß einem oder mehreren der Ansprüche 1 bis 9, wobei es sich bei dem Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/Acrylnitril-Butadien-Styrol), Polyamid, Polyester und/oder ABS handelt.

14. Polymer-Formkörper, -Filme, -Fäden und -Fasern nach Anspruch 13, **dadurch gekennzeichnet, dass** sie die Flammschutzmittel-Stabilisator-Kombination in einer Menge von 2 bis 50 Gew.%, bezogen auf den Polymergehalt, enthalten.

## Claims

1. A flame retardant and stabilizer combined, for thermoplastic polymers, which comprises, as component A, from 25 to 89.8% by weight of a phosphinic salt of the formula (I) and/or a diphosphinic salt of the formula (II) and/or polymers of these, 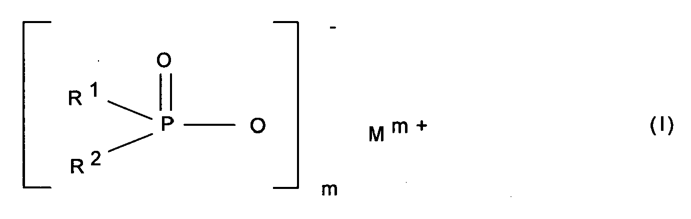 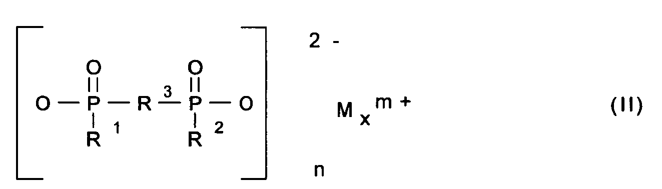 where
R¹, R² are identical or different and are methyl, ethyl, n-propyl, isopropyl, n-butyl, tert-butyl, n-pentyl and/or phenyl;
R³ is C₁-C₁₀-alkylene, linear or branched, C₆-C₁₀-arylene, -alkylarylene or -arylalkylene;
M is Mg, Ca, Al, Sb, Sn, Ge, Ti, Zn, Fe, Zr, Ce, Bi, Sr, Mn, Li, Na, K, and/or a protonated nitrogen base;
m is 1 to 4;
n is 1 to 4;
x is 1 to 4,
and comprises, as component B, from 10 to 74.8% by weight of a nitrogen-containing synergist or of a phosphorus/nitrogen flame retardant, and comprises, as component C, from 0.1 to 50% by weight of a basic or amphoteric oxide, hydroxide, carbonate, silicate, borate, stannate, mixed oxide/hydroxide, oxide/hydroxide/carbonate, hydroxide/silicate, or hydroxide/borate, or a mixture of these substances, and comprises, as component D, from 0 to 5% by weight of a phosphonite of the general structure
R-[P(OR₁)₂]ₘ (I)
where
R is a mono- or polyvalent aliphatic, aromatic, or heteroaromatic organic radical, and
R₁ is a compound of the structure (II) 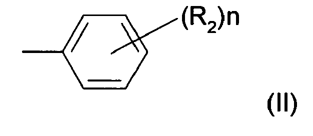 or the two radicals R₁ form a bridging group of the structure (III) 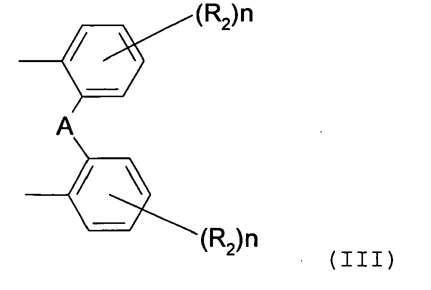 where
A is a direct bond, O, S, C₁₋₁₈-alkylene (linear or branched), C₁₋₁₈-alkylidene (linear or branched), where
R₂, independently of one another, are C₁₋₁₂-alkyl (linear or branched), C₁₋₁₂-alkoxy, C₅₋₁₂-cycloalkyl, and
n is from 0 to 5, and
m is from 1 to 4,
and comprises, as component E, from 0 to 5% by weight of an ester or salt of montan wax acid, and comprises, as component F, from 0.1 to 5% by weight of an N,N'-bispiperidinyl-1,3-benzenedicarboxamide and/or N,N'-bis (2,2,6,6-tetramethyl-4-piperidinyl)-1,3-benzenedicarboxamide, the entirety of the components always being 100% by weight.

2. The flame retardant and stabilizer combined, as claimed in claim 1, wherein R³ is methylene, ethylene, n-propylene, isopropylene, n-butylene, tert-butylene, n-pentylene or n-octylene.

3. The flame retardant and stabilizer combined, as claimed in one or more of claims 1 to 5, wherein component B comprises condensation products of melamine such as melem, melam, melon and/or compounds thereof having higher condensation levels.

4. The flame retardant and stabilizer combined, as claimed in one or more of claims 1 to 3, wherein component B comprises dimelamine pyrophosphate, melamine polyphosphate, melem polyphosphate, melam polyphosphate, melon polyphosphate and/or mixed polysalts of this type.

5. The flame retardant and stabilizer combined, as claimed in one or more of claims 1 to 4, wherein the phosphorus/nitrogen flame retardants comprise nitrogen-containing phosphates of the formula (NH₄)_{y} H_{3-y} PO₄ or (NH₄ PO₃)_{z}, where y is from 1 to 3, and z is from 1 to 10 000.

6. The flame retardant and stabilizer combined, as claimed in one or more of claims 1 to 4, wherein the nitrogen-containing synergists comprise those of the formulae (III) to (VIII), or a mixture of these 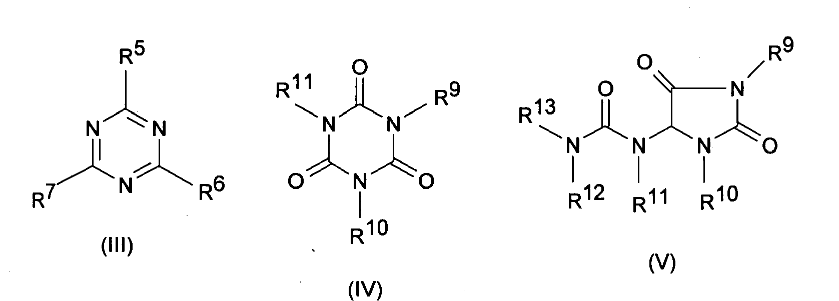 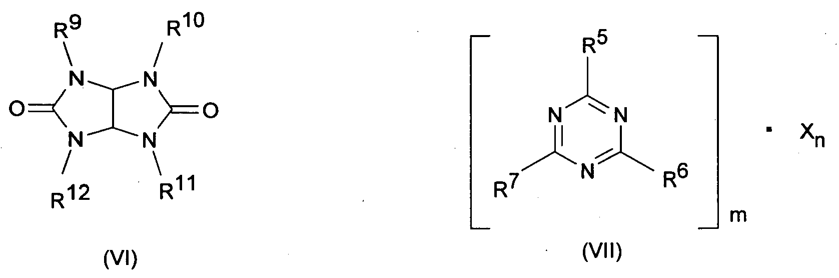 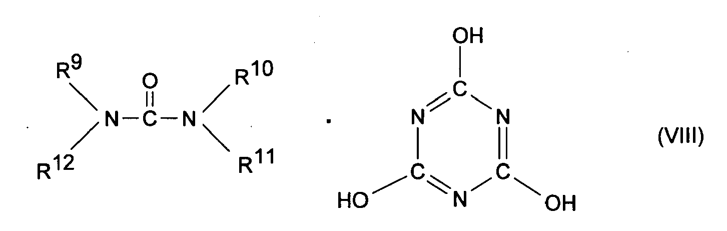 where
R⁵ to R⁷ are hydrogen, C₁-C₈-alkyl, C₅-C₁₆-cycloalkyl or -alkylcycloalkyl, optionally substituted with a hydroxy or a C₁-C₄-hydroxyalkyl function, C₂-C₈-alkenyl, C₁-C₈-alkoxy, -acyl, -acyloxy, C₆-C₁₂-aryl or-arylalkyl, -OR⁸, or -N (R⁸) R⁹, or else a system of N-alicyclic or N-aromatic nature,
R⁸ is hydrogen, C₁-C₈-alkyl, C₅-C₁₆-cycloalkyl or-alkylcycloalkyl, optionally substituted with a hydroxy or a C₁-C₄-hydroxyalkyl function, C₂-C₈-alkenyl, C₁-C₈-alkoxy, -acyl, -acyloxy, or C₆-C₁₂-aryl or -arylalkyl,
R⁹ to R¹³ are the same as the groups for R⁸, or else -O-R⁸,
m and n independently of one another, are 1, 2, 3, or 4;
X is acids which can form adducts with triazine compounds (III);
or comprise oligomeric esters of tris(hydroxyethyl) isocyanurate with aromatic polycarboxylic acids.

7. The flame retardant and stabilizer combined, as claimed in one or more of claims 1 to 6, wherein the nitrogen-containing synergists comprise benzoguanamine, tris(hydroxyethyl) isocyanurate, allantoin, glycoluril, melamine, melamine cyanurate, dicyandiamide and/or guanidine.

8. The flame retardant and stabilizer combined, as claimed in one or more of claims 1 to 7, wherein component C comprises magnesium oxide, calcium oxide, aluminum oxide, zinc oxide, manganese oxide, and/or tin oxide; aluminum hydroxide, boehmite, dihydrotalcite, hydrocalumite, magnesium hydroxide, calcium hydroxide, zinc hydroxide, tin oxide hydrate, manganese hydroxide, zinc borate, basic zinc silicate or zinc stannate.

9. The flame retardant and stabilizer combined, as claimed in one or more of claims 1 to 8, which comprises from 50 to 77.9% by weight of component A, from 20 to 47.9% by weight of component B, from 2 to 20% by weight of component C, from 0 to 3% by weight of component D, from 0 to 3% by weight of component E, and from 0.1 to 4% by weight of component F.

10. A flame-retardant plastics molding composition, comprising a flame retardant and stabilizer combined, as claimed in one or more of claims 1 to 9.

11. The flame-retardant plastics molding composition as claimed in claim 10, wherein the plastic comprises thermoplastic polymers of the type represented by HI (high-impact) polystyrene, polyphenylene ethers, polyamides, polyesters, polycarbonates, and blends or polyblends of the type represented by ABS (acrylonitrile-butadienestyrene) or PC/ABS (polycarbonate/acrylonitrile-butadiene-styrene), or PPE/HIPS (polyphenylene ether/HI polystyrene) plastics.

12. The flame-retardant plastics molding composition as claimed in claim 11, which, based on the plastics molding composition, comprises from 2 to 50% by weight of the flame retardant and stabilizer combined.

13. A polymer molding, a polymer film, a polymer filament, or a polymer fiber comprising a flame retardant and stabilizer combined, as claimed in one or more of claims 1 to 9 wherein the polymer comprises HI (high-impact) polystyrene, polyphenylene ethers, polyamides, polyesters, polycarbonates, and blends or polyblends of the type represented by ABS (acrylonitrile-butadienestyrene), or PC/ABS (polycarbonate/acrylonitrile-butadiene-styrene), polyamide, polyester and/or ABS.

14. The polymer molding, polymer film, polymer filament, or polymer fiber as claimed in claim 13, which, based on the polymer content, comprises an amount of from 2 to 50% by weight of the flame retardant and stabilizer combined.

## Revendications

1. Combinaison agent ignifuge-stabilisateur pour polymères thermoplastiques, qui contient en tant que composant A 25 à 89,8% en poids d'un sel d'acide phosphinique de formule (I) et/ou un sel d'acide diphosphinique de formule (II) et/ou leurs polymères, 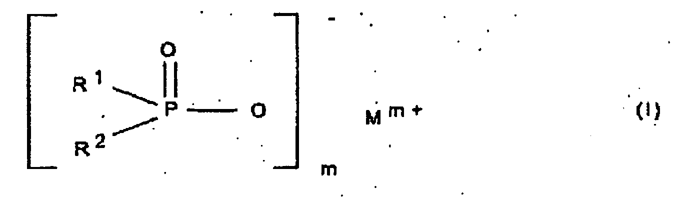 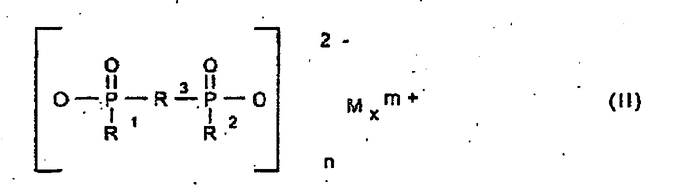 dans lesquelles
R¹, R² sont identiques ou différents et représentent méthyle, éthyle, n-propyle, iso-propyle, n-butyle, tert.-butyle, n-pentyle et/ou phényle
R³ représente un alkylène en C₁ à C₁₀, un arylène en C₆ à C₁₀, un alkylarylène en C₆ à C₁₀ ou un arylalkylène en C₆ à C₁₀ linéaire ou ramifié ;
M représente Mg, Ca, Al, Sb, Sn, Ge, Ti, Zn, Fe, Zr, Ce, Bi, Sr, Mn, Li, Na, K et/ou une base azotée protonée ;
m représente 1 à 4 ;
n représente 1 à 4 ;
x représente 1 à 4,
en tant que composant B 10 à 74,8 % en poids d'un agent synergique contenant de l'azote ou d'un agent ignifuge à base de phosphore/azote, en tant que composant C 0,1 à 50 % en poids d'un oxyde, hydroxyde, carbonate, silicate, borate, stannate, oxyde-hydroxyde mixte, carbonate d'oxyde-hydroxyde, silicate d'hydroxyde ou borate d'hydroxyde basique ou amphotère ou des mélanges de ces substances, en tant que composant D 0 à 5 % en poids d'un phosphonite de structure générale
R-[P(OR1)2]m (I)
dans laquelle
R représente un radical organique mono ou polyvalent aliphatique, aromatique ou hétéroaromatique et
R₁ représente un composé de structure (II) 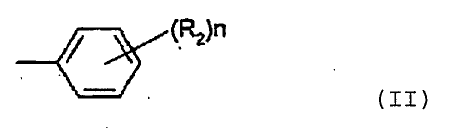 ou les deux radicaux R₁ forment un groupement ponté de structure (III) 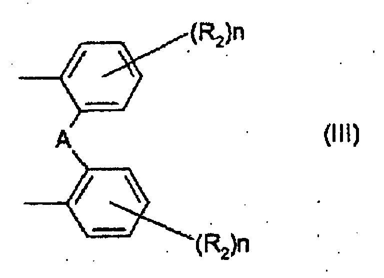 dans laquelle
A représente une liaison directe, O, S, un alkylène en C₁ à C₁₈ (linéaire ou ramifié), un alkylidène en C₁ à C₁₈ (linéaire ou ramifié),
R₂ représentent indépendamment les uns des autres un alkyle en C₁ à C₁₂ (linéaire ou ramifié), un alcoxy en C₁ à C₁₂, un cycloalkyle en C₅ à C₁₂ et
n représente 0 à 5 et
m représente 1 à 4,
en tant que composant E 0 à 5 % en poids d'un ester ou d'un sel de l'acide de la cire de Montana et en tant que composant F 0,1 à 5 % en poids de N,N'-bis-pipéridinyl-1,3-benzènedicarboxamide et/ou de N,N'-bis(2,2,6,6-tétraméthyl-4-pipéridinyl)-1,3-benzènedicarboxamide, la somme des composants atteignant toujours 100 %.

2. Combinaison agent ignifuge-stabilisateur selon la revendication 1, **caractérisée en ce que** R³ représente méthylène, éthylène, n-propylène, iso-propylène, n-butylène, tert.-butylène, n-pentylène ou n-octylène.

3. Combinaison agent ignifuge-stabilisateur selon une ou plusieurs des revendications 1 à 2, **caractérisée en ce que** le composant B est un produit de condensation de la mélamine, tel que le melem, le mélame, le mélon et/ou des composés hautement condensés.

4. Combinaison agent ignifuge-stabilisateur selon une ou plusieurs des revendications 1 à 3, **caractérisée en ce que** le composant B est le pyrophosphate de dimélamine, le polyphosphate de mélamine, le polyphosphate de melem, le polyphosphate de mélame, le polyphosphate de mélon et/ou des polysels mixtes de ce type.

5. Combinaison agent ignifuge-stabilisateur selon une ou plusieurs des revendications 1 à 4, **caractérisée en ce que** l'agent ignifuge à base de phosphore/azote est un phosphate contenant de l'azote de formule (NH₄)_{y}H_{3-y}PO₄ ou (NH₄PO₃) _{z}, avec y représentant 1 à 3 et z représentant 1 à 10 000.

6. Combinaison agent ignifuge-stabilisateur selon une ou plusieurs des revendications 1 à 4, **caractérisée en ce que** l'agent synergique contenant de l'azote est un agent de formule (III) à (VIII) ou leurs mélanges 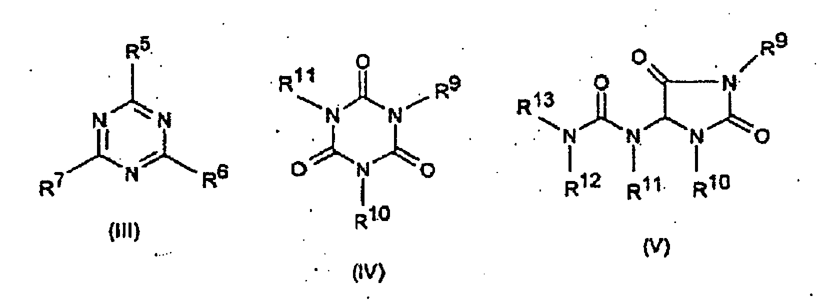 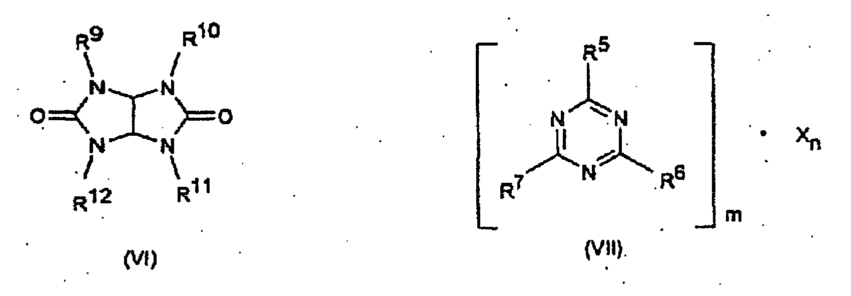 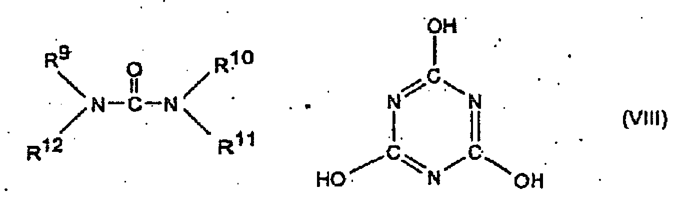 dans lesquelles
R⁵ à R⁷ représentent hydrogène, alkyle en C₁ à C₈, cycloalkyle en C₅ à C₁₆ ou alkylcycloalkyle en C₅ à C₁₆, éventuellement substitué par une fonction hydroxy ou hydroxyalkyle en C₁ à C₄, alcényle en C₂ à C₈, alcoxy en C₁ à C₈, acyle en C₁ à C₈, acyloxy en C₁ à C₈, aryle en C₆ à C₁₂ ou arylalkyle en C₆ à C₁₂, -OR⁸ et -N (R⁸) R⁹, et N-acyclique ou N-aromatique,
R⁸ représente hydrogène, alkyle en C₁ à C₈, cycloalkyle en C₅ à C₁₆ ou alkylcycloalkyle en C₅ à C₁₆, éventuellement substitué par une fonction hydroxy ou hydroxyalkyle en C₁ à C₄, alcényle en C₂ à C₈, alcoxy en C₁ à C₈, acyle en C₁ à C₈, acyloxy en C₁ à C₈, aryle en C₆ à C₁₂ ou arylalkyle en C₆ à C₁₂,
R⁹ à R¹³ représentent les mêmes groupements que R⁸ et -OR₈,
m et n représentent indépendamment l'un de l'autre 1, 2, 3 ou 4
X représente des acides qui peuvent former des réactifs avec des composés de triazine (III) ;
ou des esters oligomériques de tris (hydroxyéthyl)isocyanurate avec des acides polycarboxyliques aromatiques.

7. Combinaison agent ignifuge-stabilisateur selon une ou plusieurs des revendications 1 à 6, **caractérisée en ce que** l'agent synergique contenant de l'azote est la benzoguanamine, le tris(hydroxyéthyl)isocyanurate, l'allantoïne, le glycouril, la mélamine, le cyanurate de mélanine, le dicyandiamide et/ou la guanidine.

8. Combinaison agent ignifuge-stabilisateur selon une ou plusieurs des revendications 1 à 7, **caractérisée en ce que** le composant C est l'oxyde de magnésium, l'oxyde de calcium, l'oxyde d'aluminium, l'oxyde de zinc, l'oxyde de manganèse et/ou l'oxyde d'étain ; l'hydroxyde d'aluminium, la boehmite, le dihydrotalcite, l'hydrocalumite, l'hydroxyde de magnésium, l'hydroxyde de calcium, l'hydroxyde de zinc, l'hydrate d'oxyde d'étain, l'hydroxyde de manganèse, le borate de zinc, le silicate de zinc basique ou le stannate de zinc.

9. Combinaison agent ignifuge-stabilisateur selon une ou plusieurs des revendications 1 à 8, **caractérisée en ce qu'**elle contient 50 à 77,9 % en poids du composant A, 20 à 47,9 % en poids du composant B et 2 à 20 % en poids du composant C, 0 à 3 % en poids du composant D, 0 à 3 % en poids du composant E et 0,1 à 4 % en poids du composant F.

10. Matériau de moulage en plastique ignifugé qui contient une combinaison agent ignifuge-stabilisateur selon une ou plusieurs des revendications 1 à 9.

11. Matériau de moulage en plastique ignifugé selon la revendication 10, **caractérisé en ce que** le plastique est composé de polymères thermoplastiques de type polystyrène HI (High Impact), éther de polyphénylène, polyamide, polyester, polycarbonate et mélanges ou mélanges polymères de type ABS (acrylonitrile-butadiène-styrène) ou PC/ABS (polycarbonate/acrylonitrile-butadiène-styrène) ou PPE/HIPS (éther de polyphénylène/polystyrène HI).

12. Matériau de moulage en plastique ignifugé selon la revendication 11, **caractérisé en ce qu'**il contient la combinaison agent ignifuge-stabilisateur en une quantité de 2 à 50 % en poids par rapport au matériau de moulage en plastique.

13. Corps moulés, films, filaments et fibres polymères contenant une combinaison agent ignifuge-stabilisateur selon une ou plusieurs des revendications 1 à 9, les polymères étant du polystyrène HI (High Impact), de l'éther de polyphénylène, du polyamide, du polyester, du polycarbonate et des mélanges ou des mélanges polymères de type ABS (acrylonitrile-butadiène-styrène) ou PC/ABS (polycarbonate/acrylonitrile-butadiène-styrène), du polyamide, du polyester et/ou de l'ABS.

14. Corps moulés, films, filaments et fibres polymères selon la revendication 13, **caractérisé en ce qu'**ils contiennent la combinaison agent ignifuge-stabilisateur en une quantité de 2 à 50 % en poids par rapport à la teneur en polymère.
